# EUROPÄISCHE PATENTSCHRIFT

(11) **EP 0 411 446 B1**
(45) Veröffentlichungstag und Bekanntmachung des Hinweises auf die Patenterteilung: **09.03.1994**
(21) Anmeldenummer: 90114207.5
(22) Anmeldetag: 25.07.1990
(51) Int. Cl.: B23P 23/02

(54) **Fertigungsanlage für die spanabhebende Bearbeitung von Mittel- und Grossteilen**
Manufacturing device for the machining of medium-size and large parts
Dispositif de fabrication pour usinage de pièces de moyenne et de grande dimension

(30) Priorität: 02.08.1989 DE 3925568
(43) Veröffentlichungstag der Anmeldung: 06.02.1991
(73) Patentinhaber: Hermann Kolb Maschinenfabrik AG, D-50825 Köln (DE)
(72) Erfinder: Binder, Rolf, Dipl.-Ing., D-4050 Mönchengladbach 2 (DE)
(74) Vertreter: Vièl, Georg, Dipl.-Ing.

(56) Entgegenhaltungen:
- DE-A- 3 243 335
- DE-A- 3 519 545
- VDI-Z (ENTWICKLUNG, KON- STRUKTION, PRODUKTION), Band 129, Jahrgang 1987, Nr.8, August 1987 VDI Verlag GMBH, DUsseldorf R. VITS " Aufgabenangepa teFertigungsstrukturen" Seiten 63-69
- WT-ZEITSCHRIFT F R INDU- STRIELLE FERTIGUNG, 73. Jahr- gang, Nr. 3, 1983Springer Verlag, Heidelberg BINDER, HAMMER "FUnfseiten- bearbeitung v. Groteilen auf einer Fertigungszelle" Seiten 195-198

## Beschreibung

Die Erfindung betrifft eine Fertigungsanlage für die spanabhebende Bearbeitung von Mittel- und Großteilen, wobei mit Hilfe von Bearbeitungszentren eine Fünf-Seiten-Bearbeitung erfolgt, daß jedem Bearbeitungszentrum je ein Magazin für Werkzeuge und Vorsatzbearbeitungsköpfe zugeordnet ist und daß ein Transportwagen für Werkstückpaletten vorgesehen ist.

Bei Mittel- und Großteilen erfolgt derzeit die Ausführung aller erforderlichen Bearbeitungen weitgehend auf Einzelmaschinen und Bearbeitungszentren Das bedeutet beispielsweise Fräsen, Bohren, Gewinden, Drehen, Schleifen, Hobeln usw. werden auf verschiedenen, voneinander getrennten Maschinen vorgenommen. Mit dieser Arbeitsweise ergibt sich vor allem der Nachteil langer Bearbeitungs- und Liegezeiten und damit langer Durchlaufzeiten pro Werkstück, sei es beispielsweise ein Werkzeugmaschinenständer oder der Motorblock für einen Schiffsdiesel u.a..

R. Binder und H. Hammer haben in "Werkstatt-Technik - wt-Zeitschrift für industrielle Fertigung", 1983, Heft 4, Seite 195 - 198 eine Fertigungszelle für die Fünf-Seiten-Komplett-Bearbeitung von Großteilen gemäß Oberbegriff von Patentanspruch 1 beschrieben.

Aus dem Dokument DE-A-35 19 545 ist ein Verkettungssystem für Werkzeugmaschinen mit Zusatzwerkzeugmagazinen bekannt. Es findet allerdings dabei kein Wechsel von Vorsatzbearbeitungsköpfen statt, vielmehr geht es dort ausschließlich um einen Werkzeugwechsel. Auch beschäftigt sich dieses Dokument ausschließlich mit Vertikalbearbeitungsmaschinen und, das Transportsystem ist umständlich. Das in dem Dokument beschriebene Verkettungssystem weist im übrigen den Nachteil auf, daß zusätzliche Zeit für den Werkzeugwechsel über die maschineneigenen Funktionen benötigt wird.

Auch ist aus der DE-PS 32 43 335 eine flexible Fertigungszelle bekannt, bei der allerdings die Transporteinrichtung als Handhabungsgerät in Kreuzportalbauweise ausgebildet ist und der Transport von zweierlei Teilen, nämlich Werkstücken auf Paletten und Einzel-Werkzeugen aus Magazinen bewerkstelligt wird.

Der Erfindung liegt die Aufgabe zu Grunde, die bekannte Arbeitsweise noch rationeller auf die gesamte großmechanische Fertigung zu übertragen, d.h. die Mittel- und Großteilefertigung einer Fabrik in einem gemischten flexiblen Verbundsystem komplett und wesentlich wirtschaftlicher durchzuführen.

Diese Aufgabe wird erfindungsgemäß dadurch gelöst, daß sich ersetzende oder ergänzende Bearbeitungszentren vorgesehen sind, deren Spindelstöcke aus beiden Magazinen von je einem Handhabungsgerät beschickt werden können, und daß der Transportwagen zusätzlich zum Transport für die Werkzeugmagazine und die Vorsatzbearbeitungskopfmagazine vorgesehen ist.

Nach einer weiteren Ausbildung der Erfindung ist vorgesehen, daß ein Bearbeitungszentrum in Horizontal-Bauweise und das andere Bearbeitungszentrum in Vertikal-Bauweise ausgeführt ist.

Erfindungsgemäß ist es auch möglich, daß die Werkzeugmagazine aus mehreren verfahrbaren Regalen bestehen und daß das äußere, von dem Bearbeitungszentrum abgewandte Regal zum Werkzeugwechsel ganz herausfahrbar und mit dem Transportwagen beförderbar ist.

Gemäß der Erfindung ist ebenfalls vorgesehen, daß bei einem oder mehreren Vorsatzbearbeitungskopfmagazinen diese aus mehreren verfahrbaren Containern bestehen und daß der vordere Container zum Vorsatzbearbeitungskopfwechsel ganz herausfahrbar und mit dem Transportwagen beförderbar ist.

Das erfindungsgemäße Mehrfunktions-Transportsystem kann erfindungsgemäß vor, hinter oder über den Bearbeitungszentren wirkend angeordnet sein.

Im Rahmen der Erfindung liegt es auch, daß über das Bearbeitungszentrum in Horizontal-Bauweise hinaus eines oder mehrere weitere Bearbeitungszentren in Horizontal-Bauweise vorgesehen sind.

Analog kann erfindungsgemäß auch mehr als ein Bearbeitungszentrum in Vertikal-Bauweise vorhanden sein.

Die mit der Erfindung erzielten Vorteile bestehen im wesentlichen darin, daß es nun möglich ist, mit kurzen Bearbeitungs- und Durchlaufzeiten sowie mit großer Flexibilität und Wirtschaftlichkeit die Mittel- und Großteile einer Fabrik in einem System zu bearbeiten; das Werkstück wird in das flexible Fertigungssystem eingegeben und verläßt es komplett in einer oder mehreren Spannungen günstig gefertigt. Vergleicht man außerdem das Neuinvestitionsvolumen einer konventionellen Großteilefertigung mit einem Flexiblen Fertigungs-System (FFS) gleicher Kapazität, so ist das bereitzustellende Kapital im ersten Fall höher anzusetzen. Das liegt auch daran, daß eine Systemmaschine bis zu acht oder zehn konventionelle Bearbeitungsmaschinen ersetzen kann. Auch ist der Platzbedarf wesentlich geringer gegenüber einer konventionellen Fertigung.

Um einen maximalen Fertigungsnutzungsgrad zu erzielen, ist der Automatisierungsgrad des Systems so weit entwickelt, daß alle Versorgungen von außen wie Werkstücke, Werkzeuge einzeln oder in Gruppen und Bearbeitungsköpfe automatisch erfolgen. Das stellt sicher, daß das System oder einzelne Systemmaschinen außer zu Wartungs- und Servicegründen nicht stillgesetzt werden müssen.

Die Erfindung wird anhand der Zeichnungen im folgenden näher beschrieben.

Es zeigt
- Fig. 1: ein Bearbeitungszentrum in Horizontal-Bauweise,
- Fig. 2: ein Bearbeitungszentrum in Vertikal-Bauweise,
- Fig. 3: eine erfindungsgemäße Fertigungsanlage mit zwei Bearbeitungszentren in Horizontal- und Vertikal-Bauweise,
- Fig. 4: Einzelheiten zu den Magazinen für Werkzeuge und Vorsatzbearbeitungsköpfe bezüglich des Bearbeitungszentrums in Vertikal-Bauweise,
- Fig. 5: als Beispiel für in die Spindelstöcke der Bearbeitungszentren einwechselbare Werkzeuge einen Bohrer und
- Fig. 6: das Beispiel für einen Vorsatzbearbeitungskopf.

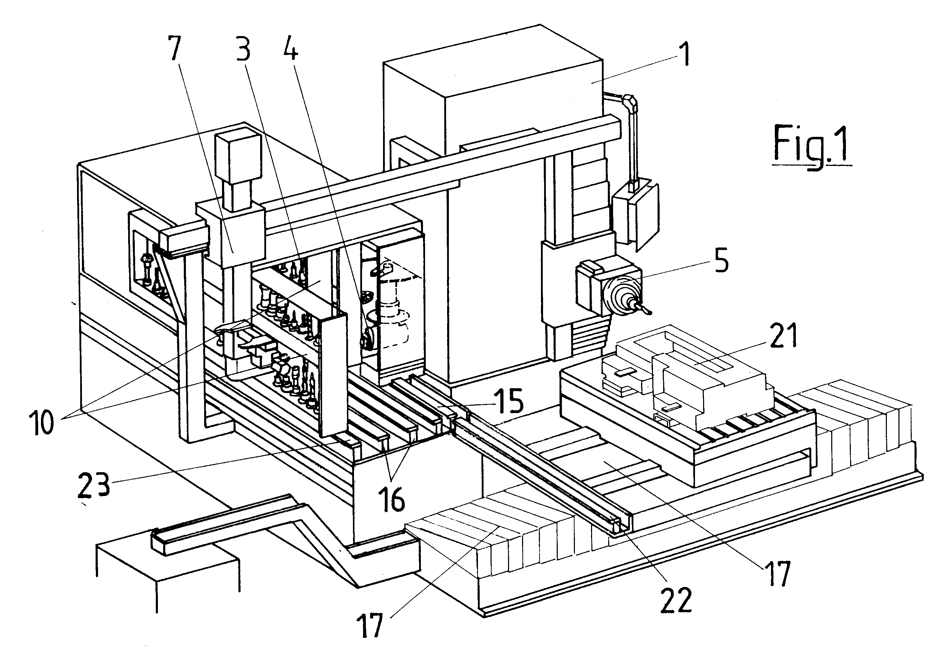

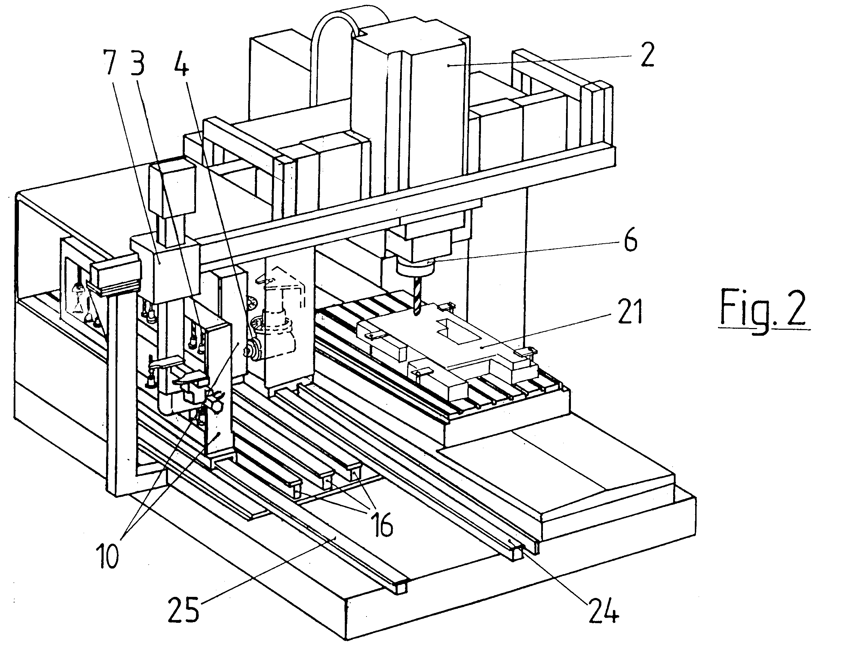

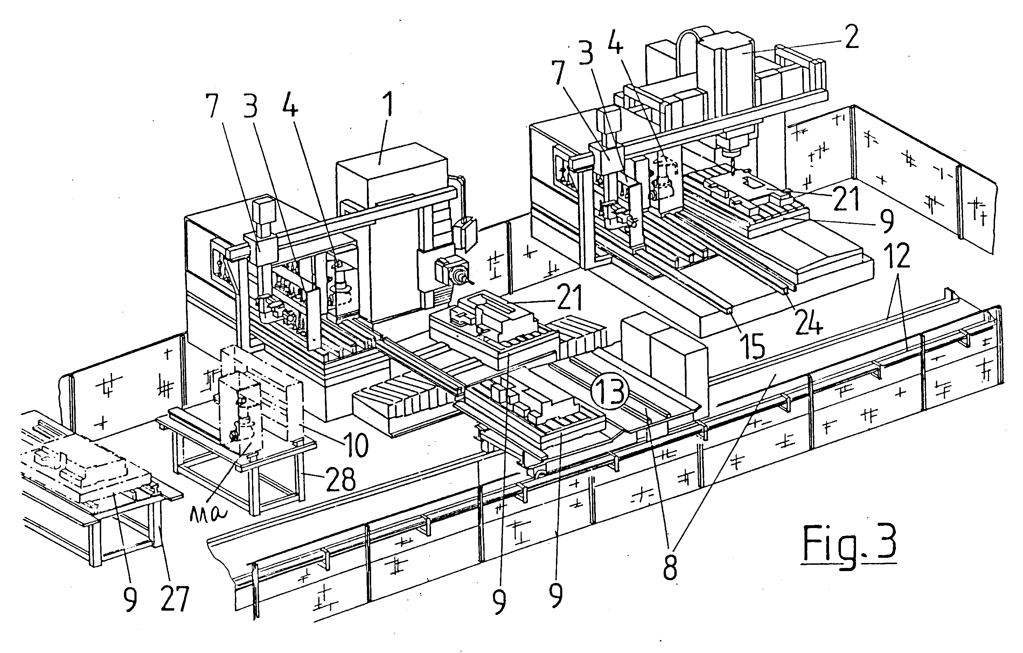

Ein Ausführungsbeispiel der Erfindung ist in Fig. 3 dargestellt. In den Fig. 1 und 2 sind jedoch der besseren Übersicht halber für sich allein ein Bearbeitungszentrum in Horizontal-Bauweise (Fig. 1) und ein Bearbeitungszentrum in Vertikal-Bauweise (Fig. 2) dargestellt.

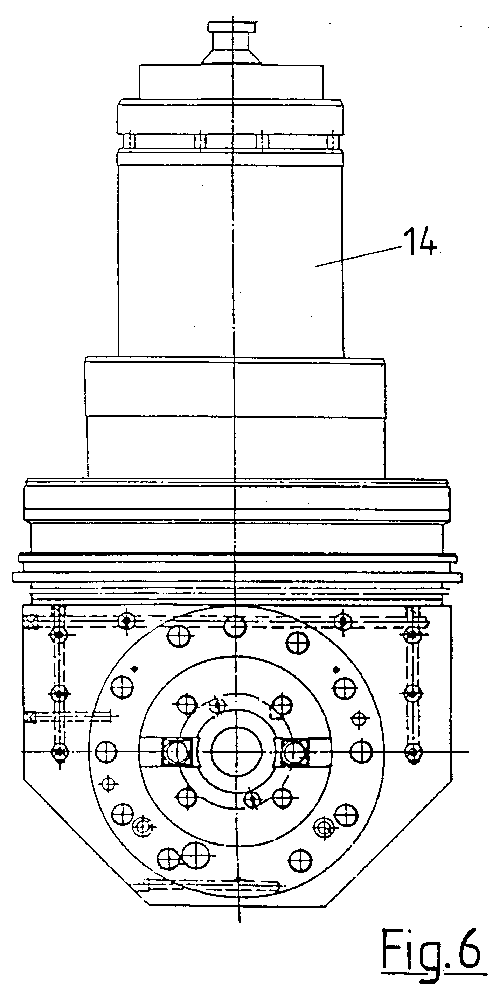

Wie aus Fig. 1 ersichtlich, ist das Bearbeitungszentrum 1 in Horizontal-Bauweise ausgeführt. Unmittelbar neben dem Bearbeitungszentrum 1 befinden sich ein oder mehrere Vorsatzbearbeitungskopfmagazine 4. Die einzelnen Container 11 zur Aufnahme der Vorsatzbearbeitungsköpfe 14 (Fig. 6) sind vorzugsweise hintereinander angeordnet und auf einer Schiene 15 verfahrbar.

Neben dem Vorsatzbearbeitungskopfmagazin 4 befindet sich, auf Schienen 16 verfahrbar, das Magazin für die Werkzeuge 3. Das Werkzeugmagazin 3 besteht aus mehreren verfahrbaren Regalen 10.

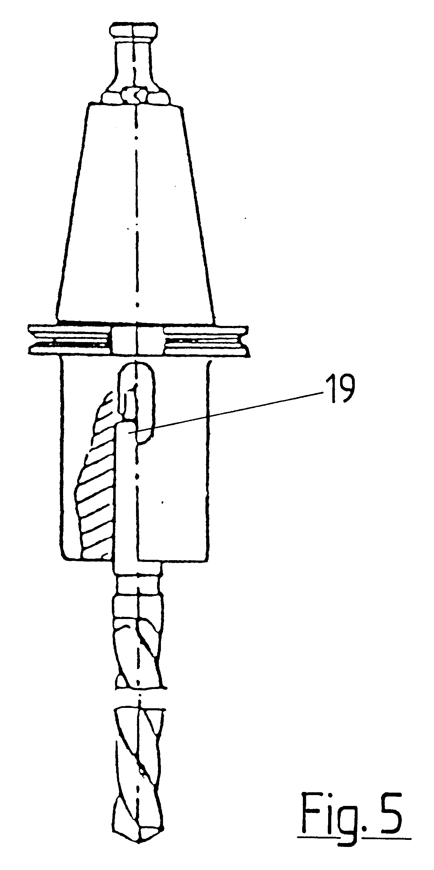

Zum Ein- und Auswechseln der Vorsatzbearbeitungsköpfe 14 und der Werkzeuge 19 (Fig. 5) in den Spindelstock 5 ist ein Handhabungsgerät 7 vorgesehen. Dieses Handhabungsgerät 7 ist so ausgebildet, daß es bei dem Bearbeitunszentrum 1 - dasselbe gilt für das noch zu beschreibende Bearbeitungszentrum in Vertikal-Bauweise 2 in Fig. 2 - Vorsatzbearbeitungsköpfe 14 sowie Werkzeuge 19 horizontal und vertikal in den Spindelstock 5 bzw. 6 der Bearbeitungszentren 1 und 2 austauschen kann.

An dem die Werkstücke 21 tragenden Tisch ist ein Schienenstück 22 angebracht, das vor die Schiene 15 des Magazins für die Vorsatzbearbeitungsköpfe 4 verfahrbar ist, aber auch passend für die erste Schiene 23 herbeifahrbar ist. Mit diesem Herbeifahren des Schienenstücks 22 wird von dem Magazin für die Werkzeuge 3 bzw. demjenigen für die Vorsatzbearbeitungsköpfe 4 der logistische Anschluß zu dem noch zu beschreibenden Mehrfunktions-Transportsystem 8 hergestellt.

Das in Fig. 2 dargestellte Bearbeitungszentrum in Vertikal-Bauweise 2 ist in Portal-Bauweise ausgeführt, wie aus Fig. 2 ohne weiteres ersichtlich ist. Diese vorzugsweise Bauweise für das Vertikal-Bearbeitungszentrum 2 hat den Vorzug großer Stabilität und damit hoher Genauigkeit für die Bearbeitungsvorgänge. Auch bei diesem Bearbeitungszentrum 2 in Vertikal-Bauweise ist je ein Magazin 3 bzw. 4 für die Werkzeuge 19 und die Vorsatzbearbeitungsköpfe 14 vorgesehen. Das Handhabungsgerät 7 ist identisch mit demjenigen für das Bearbeitungszentrum in Horizontal-Bauweise 1.

Ein Unterschied für den Anschluß an das Mehrfunktions-Transportsystem 8 (Fig. 3) besteht darin, daß die Schiene 15 für den Container 11a der Vorsatzbearbeitungsköpfe 14 um ein fest angebrachtes Stück 24 zum Anschluß an das Mehrfunktions-Transportsystem 8 verlängert ist. In analoger Weise ist die erste Schiene für die Magazine für Werkzeuge 3 um ein festes Stück 25 in Richtung des Mehrfunktions-Transportsytems 8 verlängert.

In Fig. 3 nun ist eine Fertigungsanlage gemäß der Erfindung für die spanabhebende Bearbeitung von Mittel- und Großteilen dargestellt. Es sind zwei Bearbeitungszentren 1 und 2 zu sehen, wobei das Bearbeitungszentrum 1 in Horizontal-Bauweise und das Bearbeitungszentrum 2 in Vertikal-Bauweise ausgeführt ist. Beide Bearbeitungszentren 1 und 2 haben je ein Magazin für Vorsatzbearbeitungsköpfe 4 und ein aus mehreren Regalen 10 bestehendes Magazin für Werkzeuge 3. Es ist ein Handhabungsgerät 7 vorgesehen, das für die beiden Bearbeitungszentren 1 und 2 gleich ausgeführt ist. Mit ihm werden in die Spindelstöcke 5 bzw. 6 Werkzeuge 19 oder Vorsatzbearbeitungsköpfe 14 ausgetauscht.

Als Mehrfunktions-Transportsystem 8, das im gezeichneten Beispiel vor den Bearbeitungszentren 1 und 2 angeordnet ist, ist im wesentlichen ein Schienenpaar 12 vorgesehen, auf dem ein Transportwagen 13 verfahrbar ist, der alle logistischen Funktionen übernimmt: mit dem Transportwagen 13 können einmal auf Paletten 26 die zu bearbeitenden Werkstücke 21 von dem Vorrüstplatz 27 herbeigefahren und dem eigentlichen Tisch der Bearbeitungszentren 1 und 2 übergeben werden Zum anderen kann das äußere, von dem Bearbeitungszentrum 1 bzw. 2 abgewandte Regal 10 zum Werkzeugwechsel über das an dem Tisch 18 angebrachte Schienenstück 22 bzw. im Falle des Bearbeitungszentrums 2 über das feste Schienenstück 25 auf den Tansportwagen gezogen werden. Der Transport eines Regals 10 bzw. eines Containers 11 erfolgt zu dem Platz 28, wo neue Werkzeuge bzw. Vorsatzbearbeitungsköpfe in das Regal 10 bzw. den Container 11 eingesetzt werden können.

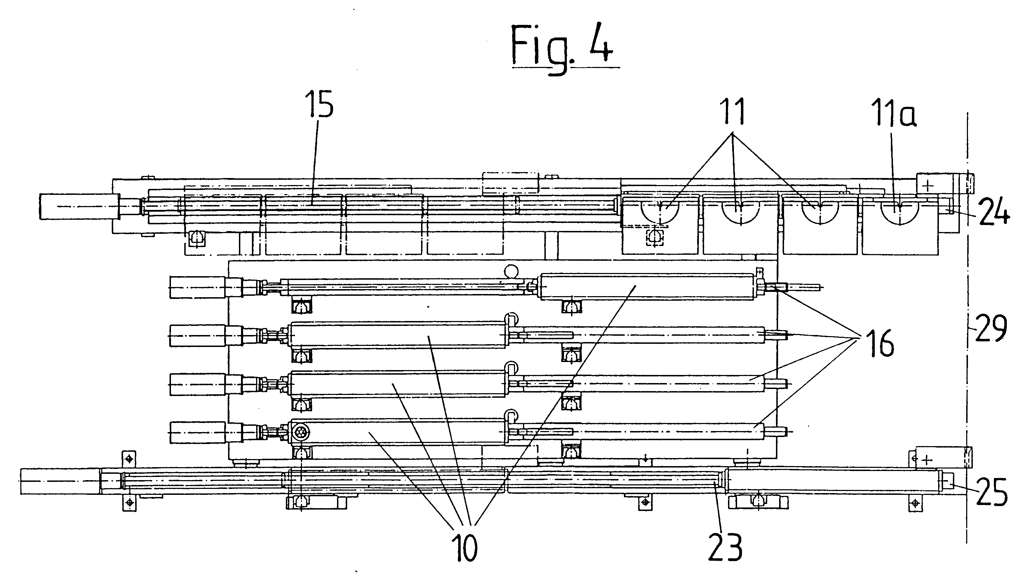

Für den Fall des Bearbeitungszentrums 2 in Vertikal-Bauweise ist in Fig. 4 in Draufsicht detailliert dargestellt, wie die Regale 10 für die Werkzeuge und die Dontainer 11 für die Vorsatzbearbeitungsköpfe 14 angeordnet bzw. verfahrbar sind. Die Regale 10 sind in Längsrichtung begrenzt verfahrbar. Die erste Schiene 23 für ein Regal 10 ist allerdings so verlängert, daß das darauf verfahrbare Regal 10 bis zur Mitnehmerebene 29 des Mehrfunktions-Transportsystems 8 herausziehbar ist und von dort auf den z. B. Transportwagen 13 gezogen werden kann. In ähnlicher Weise ist eine feste Schiene 24 für die Container 11 vorgesehen und der vordere Gontainer kann, ebenso wie das äußere Regal 10, in die Mitnehmerebene des Mehrfunktions-Transportsystems 8 gezogen und von dort auf den Transportwagen 13 gebracht werden. - Wie vorher beschrieben, ist die Arbeitsweise bei dem Bearbeitungszentrum in Horizontal-Bauweise 1 etwas anders, weil dort jeweils ein Schienenstück 22, was an dem Tisch 18 befestigt ist, herangefahren werden muß, um die Überleitung eines Containers bzw. eines Werkzeugregals 10 auf das Mehrfunktions-Transportsystem bzw. den Transportwagen 13 zu ermöglichen.

Besonders hervorzuheben ist damit, daß mit dem Mehrfunktions-Transportsystem 8 nur ein System vorhanden ist, mit dem die Werkstückpaletten 9 verfahrbar sind und sowohl die Werkzeugmagazine 3 als auch die Vorsatzbearbeitungskopfmagazine 4 versorgt werden können.

Auch ist der Tausch von Regalmagzinen und Vorsatzbearbeitungskopfmagazinen von Maschine zu Maschine möglich.

## Patentansprüche

1. Fertigungsanlage für die spanabhebende Bearbeitung von Mittel- und Großteilen, wobei mit Hilfe von Bearbeitungszentren (1, 2) eine Fünf-Seiten-Bearbeitung erfolgt, daß jedem Bearbeitungszentrum (1, 2) je ein Magazin für Werkzeuge (3) und Vorsatzbearbeitungsköpfe (4) zugeordnet ist und daß ein Transportwagen für Werkstückpaletten (9) vorgesehen ist, **dadurch gekennzeichnet**, daß sich ersetzende oder ergänzende Bearbeitungszentren (1, 2) vorgesehen sind, deren Spindelstöcke (5, 6) aus beiden Magazinen (3, 4) von je einem Handhabungsgerät (7) beschickt werden können, und daß der Transportwagen zusätzlich zum Transport für die Werkzeugmagazine (3) und die Vorsatzbearbeitungskopfmagazine (4) vorgesehen ist.

2. Fertigungsanlage nach Anspruch 1, **dadurch gekennzeichnet**, daß ein Bearbeitungszentrum (1) in Horizontal-Bauweise und das andere Bearbeitungszentrum (2) in Vertikal-Bauweise ausgeführt ist.

3. Fertigungsanlage nach Anspruch 1, **dadurch gekennzeichnet**, daß die Werkzeugmagazine (3) aus mehreren verfahrbaren Regalen (10) bestehen und daß das äußere, von dem Bearbeitungszentrum (12) abgewandte Regal (10) zum Werkzeugwechsel ganz herausfahrbar und mit dem Transportwagen (8) beförderbar ist.

4. Fertigungsanlage nach Anspruch 1, **dadurch gekennzeichnet**, daß bei einem oder mehreren Vorsatzbearbeitungskopfmagazinen (4) diese aus mehreren verfahrbaren Containern (11) bestehen und daß der vordere Container (11a) zum Vorsatzbearbeitungskopfwechsel ganz herausfahrbar und mit dem Transportwagen (8) beförderbar ist.

5. Fertigungsanlage nach Anspruch 1, **dadurch gekennzeichnet**, daß der Transportwagen (8) über den Bearbeitungszentren (1, 2) wirkend angeordnet ist.

6. Fertigungsanlage nach Anspruch 1, **dadurch gekennzeichnet**, daß über das Bearbeitungszentrum (1) in Horizontal-Bauweise hinaus eines oder mehrere weitere Bearbeitungszentren in Horizontal-Bauweise vorgesehen sind.

7. Fertigungsanlage nach Anspruch 2, **dadurch gekennzeichnet**, daß mehr als ein Bearbeitungszentrum (2) in Vertikal-Bauweise vorgesehen ist.

## Claims

1. Production plant for the cutting machining of medium-sized and large parts, wherein five-sided machining is effected with the aid of machining centres (1, 2), a magazine (3) for tools and a magazine (4) for adaptor machining heads are associated with each machining centre (1, 2), and a transport carriage is provided for workpiece pallets (9), characterized in that machining centres (1, 2) replacing or supplementing one another are provided, whose headstocks (5, 6) can be fed from both magazines (3, 4) by a respective handling apparatus (7), and in that the transport carriage is additionally provided for transport for the tool magazines (3) and the adaptor machining head magazines (4).

2. Production plant according to Claim 1, characterized in that one machining centre (1) is of the horizontal type and the other machining centre (2) is of the vertical type.

3. Production plant according to Claim 1, characterized in that the tool magazines (3) consist of a Plurality of movable shelves (10) and in that for a tool change the outer shelf (10) remote from the machining centre (12) can be moved out completely and be transported by means of the transport carriage (8).

4. Production plant according to Claim 1, characterized in that one or more of the adaptor machining head magazines (4) consists or consist of a plurality of movable containers (11), and in that for an adaptor machining head change the front container (11a) can be moved out completely and be transported by means of the transport carriage (8).

5. Production plant according to Claim 1, characterized in that the transport carriage (8) is arranged to operate over the machining centres (1, 2).

6. Production plant according to Claim 1, characterized in that in addition to the machining centre (1) of the horizontal type one or more additional machining centres of the horizontal type is or are provided.

7. Production plant according to Claim 2, characterized in that more than one machining centre (2) of the vertical type is provided.

## Revendications

1. Installation de fabrication pour l'usinage, avec enlèvement de copeaux, de pièces de moyenne et de grande dimension, un usinage sur cinq côtés étant réalisé à l'aide de centres d'usinage (1, 2), dans laquelle un magasin (3) pour des outils et un magasin (4) pour des têtes d'usinage adaptables sont associés à chaque centre d'usinage (1, 2) et un chariot de transport est prévu pour des palettes de pièces (9), **caractérisée** par le fait qu'il est prévu des centres d'usinage (1, 2) interchangeables ou complémentaires dont les poupées fixes (5, 6) peuvent être chacune alimentées à partir des deux magasins (3, 4) par un manipulateur (7) propre et que le chariot de transport est prévu de plus pour le transport des magasins d'outils (3) et des magasins de têtes d'usinage adaptables (4).

2. Installation de fabrication selon la revendication 1, **caractérisée** par le fait qu'un centre d'usinage (1) est horizontal et l'autre centre d'usinage (2) est vertical.

3. Installation de fabrication selon la revendication 1, **caractérisée** par le fait que les magasins d'outils (3) sont composés de plusieurs rayonnages (10) mobiles et que le rayonnage (10) extérieur éloigné du centre d'usinage (1, 2) peut être sorti complètement pour effectuer le changement d'outil et peut être transporté avec le chariot de transport (13).

4. Installation de fabrication selon la revendication 1, **caractérisée** par le fait que le ou les magasin(s) de têtes d'usinage adaptables (4) est (sont) composé(s) de plusieurs conteneurs (11) mobiles et que le conteneur avant (11a) peut être sorti complètement pour effectuer le changement de tête d'usinage adaptable et peut être transporté avec le chariot de transport (13)

5. Installation selon la revendication 1, **caractérisée** par le fait que le système de transport (8) est, pour agir, disposé au-dessus des centres d'usinage (1, 2).

6. Installation de fabrication selon la revendication 1, **caractérisée** par le fait qu'un ou plusieurs autres centres d'usinage horizontal sont prévus en plus du centre d'usinage (1) horizontal.

7. Installation de fabrication selon la revendication 2, **caractérisée** par le fait qu'il est prévu plus d'un centre d'usinage (2) vertical.
